(19) Europäisches Patentamt
European Patent Office
Office européen des brevets

(11) **EP 3 631 597 B1**

(12) **EUROPÄISCHE PATENTSCHRIFT**

(45) Veröffentlichungstag und Bekanntmachung des Hinweises auf die Patenterteilung:
**12.02.2025   Patentblatt 2025/07**

(21) Anmeldenummer: **18735492.3**

(22) Anmeldetag: **18.05.2018**

(51) Internationale Patentklassifikation (IPC):
**G06F 1/3206** (2019.01)     **G06F 1/3296** (2019.01)
**G06F 1/324** (2019.01)     **G06F 1/3228** (2019.01)

(52) Gemeinsame Patentklassifikation (CPC):
**G06F 1/3206; G06F 1/324; G06F 1/3296;**
G06F 1/3228; Y02D 10/00

(86) Internationale Anmeldenummer:
**PCT/DE2018/100484**

(87) Internationale Veröffentlichungsnummer:
**WO 2018/215023 (29.11.2018 Gazette 2018/48)**

(54) **MEHRKERNPROZESSOR UND VERFAHREN ZUR DYNAMISCHEN EINSTELLUNG EINER VERSORGUNGSSPANNUNG UND EINER TAKTFREQUENZ**

MULTICORE PROCESSOR AND METHOD FOR DYNAMICALLY ADJUSTING A SUPPLY VOLTAGE AND A CLOCK FREQUENCY

PROCESSEUR MULTICOEUR ET PROCÉDÉ DE RÉGLAGE DYNAMIQUE D'UNE TENSION D'ALIMENTATION ET D'UNE FRÉQUENCE D'HORLOGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **24.05.2017  DE 102017111350**

(43) Veröffentlichungstag der Anmeldung:
**08.04.2020   Patentblatt 2020/15**

(73) Patentinhaber: **TU Dresden**
**01069 Dresden (DE)**

(72) Erfinder:
• **HÖPPNER, Sebastian**
  **01159 Dresden (DE)**
• **VOGGINER, Bernhard**
  **01159 Dresden (DE)**
• **YAN, Yexin**
  **01169 Dresden (DE)**
• **MAYR, Christian**
  **01445 Radebeul (DE)**

(74) Vertreter: **Sperling, Thomas**
**Sperling, Fischer & Heyner**
**Patentanwälte**
**Tolkewitzer Straße 22**
**01277 Dresden (DE)**

(56) Entgegenhaltungen:
**DE-A1- 102005 047 619     DE-A1- 102009 019 824**

EP 3 631 597 B1

**Beschreibung**

Die Erfindung betrifft einen Mehrkernprozessor zur dynamischen Einstellung einer Versorgungsspannung und einer Taktfrequenz, welcher mehrere Prozessorelemente aufweist, wobei in jedem Prozessorelement in einem spannungsvariablen Bereich mindestens ein Prozessorkern, ein interner Speicher, ein Schaltnetzwerk und ein Pegelumsetzer angeordnet ist.

Die Erfindung betrifft auch ein Verfahren zur dynamischen Einstellung einer Versorgungsspannung und einer Taktfrequenz, bei welchem in einem Mehrkernprozessor mit mehreren Prozessorelementen für jedes Prozessorelement eine Einstellung einer benötigten Versorgungsspannung U und einer benötigten Taktfrequenz f für jeden Zyklus einer Verarbeitung einer Anzahl von Ereignissen durch einen Prozessorkern des Prozessorelements vorgenommen wird.

Bekannt sind sogenannte ereignisbasierte (event-based) Simulationen, beispielsweise für Computeranwendungen im Bereich sogenannter neuromorpher Computersysteme, bei welchen eine Simulation von spikenden neuronalen Netzen durchgeführt wird. Technische Anwendungen, bei denen ereignisbasierte Simulationen eine Rolle spielen sind beispielsweise die Bereiche der Bildverarbeitung, der Audio- und Video-Verarbeitung, der mobilen Robotik (z.B. Navigation) oder der Klassifikation von Daten. Für derartige Simulationen werden entsprechend geeignete, programmgesteuerte Prozessoren zur Verarbeitung der Daten eingesetzt.

Wie in vielen anderen Bereichen der Technik, so ist es auch bei derartigen Simulationen erwünscht, die Verlustleistung für diese Anwendungen zu reduzieren und derart beispielsweise bei gegebenen Ressourcen einen Datendurchsatz und eine Rechenkapazität dieser Systeme so hoch wie möglich zu gestalten. Als das System beschränkende Ressourcen kann beispielsweise eine Stromversorgung mit limitierter Leistung des Netzteils oder eine beschränkte Akkulaufzeit benannt werden. Beschränkungen können auch durch ein Kühlsystem bestehen, welches durch seine passive oder aktive Kühlleistung limitiert ist.

Ein beispielsweise für ereignisbasierte Simulationen genutzter Mehrkernprozessor bestehen üblicherweise aus einer Anzahl von Prozessorelementen mit je einem Prozessorkern, wobei diese Prozessorelemente miteinander verbunden sind. Eine derartige Verbindung kann beispielsweise über ein Verbindungsnetzwerk wie ein Bussystem oder ein Network-on-Chip erfolgen.

Eine Alternative stellt der Einsatz von sogenannten Mehrprozessor- oder Multiprozessorsystemen dar, wobei die zu einem Mehrprozessorsystem zugehörigen Mehrkernprozessoren wiederum über mindestens zwei Prozessorelemente mit jeweiligen Prozessorkernen zur Verarbeitung von Daten verfügen.

Zur Einsparung von Energie in derartigen Systemen ist beispielsweise ein sogenanntes dynamisches Skalieren einer Versorgungsspannung und einer Taktfrequenz eines oder mehrerer Prozessorkerne aus dem Stand der Technik bekannt. Diese dynamische Skalierung wird auch als "Dynamic Voltage and Frequency Scaling" mit der Abkürzung DVFS bezeichnet.

Bei einer derartigen dynamischen Skalierung wird, für den Fall, dass eine Anforderung an eine Rechenleistung steigt, die Versorgungsspannung und/oder die Taktfrequenz mindestens eines Prozessorkerns erhöht. In dieser Betriebsart wird viel Energie pro Task bzw. Zyklus benötigt.

Für den Fall, dass die Anforderung an die Rechenleistung absinkt oder gering ist, wird die Versorgungsspannung und/oder die Taktfrequenz eines Prozessorkerns verringert. In dieser Betriebsart wird weniger Energie pro Task bzw. Zyklus benötigt.

Üblicherweise werden zum Zweck einer dynamischen Skalierung Paare oder Wertepaare bestehend aus einer bestimmten Versorgungsspannung bzw. eines Versorgungsspannungspegels und einer zugehörigen Taktfrequenz gebildet, welche auch als Performance Level PL bezeichnet werden.

Die benötigte Rechenleistung pro Prozessorkern kann beispielsweise in Abhängigkeit von einem Eingangssignal einer ereignis- bzw. event-basierten Simulation, bei welcher beispielsweise Eingangssignale des neuronalen Netzwerkes oder Videodaten verarbeitet werden sollen, variieren und kann somit im Allgemeinen nicht vorhergesagt werden. Die Eingangssignale des neuronalen Netzwerkes oder die Videodaten stellen die mittels einem oder mehrerer Prozessorkerne zu verarbeitenden Ereignisse oder Events bei einer derartigen Simulation dar.

Da sich die Anforderungen eines oder mehrerer Prozessorkerne bei derartigen Eingangssignalen nicht voraussagen lassen, ist es auch nicht möglich, Ansätze aus dem Stand der Technik, bei denen eine zentrale Steuerung wie beispielsweise ein zentraler Power Management Controller oder ein Task Scheduler die Versorgungsspannung und/oder die Taktfrequenz der Prozessorkerne bestimmt, zu nutzen.

Es besteht somit ein Bedarf, für jeden Prozessorkern individuell zu entscheiden, bei welcher Versorgungsspannung er arbeitet. Ebenso besteht ein Bedarf, für jeden Prozessorkern individuell zu entscheiden, mit welcher Taktfrequenz er betrieben werden soll. Beide Entscheidungen sind jeweils abhängig von der momentanen Anzahl an zu prozessierenden bzw. zu verarbeitenden Ereignisse (Events), also von der jeweiligen Belastung eines Prozessorkerns.

In Mehrkernprozessoren werden eine bestimmte Anzahl n verschiedener Versorgungsspannungen in einem sogenannten Versorgungsspannungsnetz bereitgestellt. Somit stehen mehrere Versorgungsspannungen mit unterschiedlichen Pegeln wie beispielsweise $U_1=0,7$ Volt, $U_2=0,85$ Volt oder $U_3=1,0$ Volt für jedes Prozessorelement und somit für jeden Prozessorkern zur Verfügung.

Von diesen bereitgestellten Versorgungsspannungen kann jedem Prozessorkern eine Versorgungsspannung zugewiesen werden, mit welcher er aktuell betrieben werden soll. Eine derartige Auswahl bzw. Zuweisung einer Versorgungsspannung zu einem bestimmten Kern ist beispielsweise in S. Höppner, C. Shao, H. Eisenreich, G. Ellguth, M. Ander, R. Schüffny, A Power Management Architecture for Fast Per-Core DVFS in Heterogeneous MPSoCs, IEEE International Symposium on Circuits and Systems, 2012, p. 261-264 beschrieben.

Bei dieser Zuweisung einer Versorgungsspannung ist jedoch zu beachten, dass die Versorgungspannungsleitungen für den Mehrkernprozessor einer Beschränkung bezüglich ihrer maximal zulässigen Stromstärke unterliegen. Die Ursache für diese Beschränkung liegt im maximalen Ausgangsstrom des Spannungsreglers sowie einem IR-Drop auf den Versorgungsspannungsleitungen auf dem Chip selbst. IR Drop bezeichnet dabei die unerwünschte, statische und/oder dynamische Reduktion der lokalen Versorgungsspannung an den Logikzellen der Digitalschaltung, verursacht durch den Spannungsabfall über den ohmschen Widerständen des Versorgungsspanungsnetzwerks, wobei dieser Spannungsabfall durch den Stromfluss selbst verursacht wird.

Somit muss beispielsweise mittels eines geeigneten Steuerverfahrens sichergestellt werden, dass durch die individuellen Verbindungen einzelner Prozessorkerne mit den verfügbaren Versorgungsspannungen $U_1$ oder $U_2$ oder $U_3$ die Versorgungspannungsleitungen nicht überlastet werden. Die hier angegebenen drei Versorgungsspannungen sind als Beispiel und nicht als eine Beschränkung der Anzahl der Versorgungsspannungen zu verstehen.

Nach dem bekannten Stand der Technik werden Systeme mit Mehrkernprozessoren oder Mehrprozessorsysteme für event-basierte Simulationen bisher ohne Power Mangement realisiert. Ein Beispiel für ein derartiges System ist in E. Painkras, L. A. Plana, J. Garside, S. Temple, F. Galluppi, C. Patterson, D. R. Lester, A. D. Brown, and S. B. Furber, "Spinnaker: A 1-w 18-core system-on-chip for massively-parallel neural network simulation," IEEE Journal of Solid-State Circuits, vol. 48, no. 8, pp. 1943-1953, Aug 2013 zu finden.

Nach dem Stand der Technik besitzen Mehrkernprozessoren für Mobilfunkanwendungen beispielsweise eine zentrale Steuereinheit, wie einen Core Manager bzw. einen Task Scheduler, wobei diese zentrale Steuereinheit Tasks auf verschiedene Rechenkerne, welche auch als Processing Elements bezeichnet werden, verteilen kann. Hierfür ist aber eine a priori Kenntnis der notwendigen Rechenlast und Abarbeitungszeiten notwendig, um das Performance Level PL, also die Versorgungsspannung und/oder die Frequenz für einen Rechenkern einzustellen. In diesem Zusammenhang sind Verfahren, beispielsweise für eine Performance Abschätzung basierend auf dem Algorithmus bzw. Quellkode, aus der US 7685446 B2 und der US 8671413 B2 bekannt.

Mit dem Begriff der Rechenlast oder Prozessorlast werden die momentan laufenden oder auf bestimmte Ereignisse wartenden Prozesse auf einem Computersystem, also allgemein die aktuelle Auslastung beispielsweise eines Mehrkernprozessors, bezeichnet.

Bekannt sind auch Verfahren, bei denen eine zentrale Event Queue im System-on-Chip für die Bestimmung des Spannungs- und/oder Frequenzlevels einzelner Prozessorkerne benutzt wird. Ein Beispiel für eine derartige Lösung ist in US 8639862 B2 mit dem Titel "System-on-chip queue status power management" beschrieben.

Aus der DE 102009019824 A1 ist ein Verfahren bekannt, bei welchem die Prozessorlast basierend auf einer Anzahl von Ereignissen, welchen in einem Zeitintervall auftreten, bestimmt wird und wobei eine entsprechende Versorgungsspannung und Taktfrequenz eingestellt wird. Dies Einstellung wird mittels eines zentralen Controllers durchgeführt.

Die DE 10 2005 047619 A1 offenbart eine Anordnung zur Datenverarbeitung und ein Verfahren zum Steuern einer Datenverarbeitungs-Anordnung. Das zu lösende Problem besteht darin, dass eine effiziente Möglichkeit zum Reduzieren des Energieverbrauchs von eingebetteten Systemen mit einer Mehrzahl von Verarbeitungsknoten geschaffen werden soll.

Zur Lösung ist es angegeben, dass eine Anordnung zur Datenverarbeitung mit einer Mehrzahl von Verarbeitungselementen bereitgestellt wird, bei der jedem Verarbeitungselement ein Datenspeicher zugeordnet ist und jedes Verarbeitungselement eingerichtet ist, die in dem ihm zugeordneten Datenspeicher gespeicherten Daten zu verarbeiten oder Ergebnisse der von dem Verarbeitungselement durchgeführten Verarbeitung von Daten in dem Datenspeicher zu speichern. Jedem Verarbeitungselement ist ferner eine Füllstand-Einheit zugeordnet, die eingerichtet ist, ein Füllstand-Signal zu generieren, mittels welchem eine Information über die Menge der in dem dem Verarbeitungselement zugeordneten Datenspeicher gespeicherten Daten signalisiert wird. Ferner ist jedem Verarbeitungselement eine Steuerungs-Einheit zugeordnet, die eingerichtet ist, basierend auf dem von der dem Verarbeitungselement zugeordneten Füllstand-Einheit generierten Füllstand-Signal die Verarbeitungsleistung des Verarbeitungselements zu steuern.

Aus dem Stand der Technik ist es ebenfalls bekannt, dass Prozessoren die Versorgungsspannung, basierend auf Ihrer aktuellen Rechenlast, durch eine Umprogrammierung von externen Spannungsreglern ändern können.

Die Dimensionierung der Versorgungsspannungsleitungen für Mehrkernprozessoren erfolgt in der Regel für einen maximalen Strom pro Leitung, welcher Auftritt, wenn alle Prozessorelemente mit ihren Prozessorkernen mit einer dieser Leitungen verbunden arbeiten.

Die Nachteile dieses bekannten Stands der Technik liegen darin, dass bei einem Verzicht auf ein dynamisches Skalieren der Versorgungsspannung und der Taktfrequenz eines oder mehrerer Prozessorkerne für den Fall geringer Aktivitäten des angeschlossenen Netzwerkes oder der durchgeführten Simulation eine hohe Verlustleistung auftritt.

Bei einem zentralen dynamischen Skalieren bzw. Einstellen der Versorgungsspannung und der Taktfrequenz eines oder mehrerer Prozessorkerne besteht die Notwendigkeit, die Abläufe und die Rechenlast einzelner Prozessorkerne zu kennen.

Bei ereignis- bzw. event-basierten Simulationen hängen diese Abläufe bzw. die Rechenlast jedoch signifikant von sich dynamisch ändernden Aktivitäten des Netzwerkes und seiner Eingangssignale im Betrieb ab. Somit ist es nicht möglich, diese vorab zu bestimmen.

Die Aufgabe der Erfindung besteht nunmehr darin, einen Mehrkernprozessor und ein Verfahren zur dynamischen Einstellung einer Versorgungsspannung und einer Taktfrequenz anzugeben, womit eine von einer momentanen Rechenlast abhängige, individuelle Festlegung einer Versorgungsspannung und einer Taktfrequenz für jeden Prozessorkern eines Mehrkernprozessors ermöglicht wird.

Außerdem soll sichergestellt werden, dass keine der Versorgungsspannungsleitungen zur Bereitstellung verschiedener Versorgungsspannungen für die Prozessorkerne eines Mehrkernprozessors überlastet wird.

Die Aufgabe wird durch einen Mehrkernprozessor mit den Merkmalen gemäß Patentanspruch 1 der selbstständigen Patentansprüche gelöst. Weiterbildungen sind in den abhängigen Patentansprüchen 2 bis 4 angegeben.

Die Aufgabe wird auch durch eine Verfahren mit den Merkmalen gemäß Patentanspruch 5 der selbstständigen Patentansprüche gelöst. Weiterbildungen sind in den abhängigen Patentansprüchen 6 bis 10 angegeben.

Die Erfindung sieht vor, dass jeder Prozessorkern über einen lokalen Taktgenerator verfügt. Außerdem ist ein Schaltnetzwerk zur Verbindung des Prozessorkerns mit einer von mehreren verfügbaren Versorgungsspannungsleitungen vorgesehen, auf welchen mittels einer Spannungsversorgungseinheit beispielsweise die Spannungen $U_1=0{,}7$ Volt, $U_2=0{,}85$ Volt und $U_3=1{,}0$ Volt bereitstellen.

Vorgesehen ist es auch, dass jeder Prozessorkern über einen Power Management Controller (PMC) verfügt, welcher auch als interne Versorgungsspannungs-Frequenz-Steueranordnung bezeichnet wird. Diese interne Versorgungsspannungs-Frequenz-Steueranordnung steuert das Schaltnetzwerk und den Taktgenerator im Prozessorelement und stellt somit die aktuell benötigte Versorgungsspannung $U_1$, oder $U_2$ oder $U_3$ sowie die aktuell benötigte Taktfrequenz $f_1$ oder $f_2$ oder $f_3$ für den zugehörigen Prozessorkern in Abhängigkeit einer für das zugehörige Prozessorelement aktuell ermittelten Rechenlast ein. Derart wird es möglich, dass jeder Prozessorkern individuell an aktuelle Anforderungen, also an eine sich ändernde Anzahl von zu verarbeitenden Ereignissen (Events) in einem bestimmten Zyklus oder Zeitfenster, anpassbar ist.

Vorgesehen ist es, dass die interne Versorgungsspannungs-Frequenz-Steueranordnung mittels eines Steuersignals angesteuert wird und somit das Schaltnetzwerk und den Taktgenerator im Prozessorelement entsprechend einstellt. Dieses Steuersignal wird von eigenen Prozessorkern erzeugt und zur internen Versorgungsspannungs-Frequenz-Steueranordnung übertragen. In einem nicht beanspruchten Beispiel zur Erleichterung des Verständnisses der Erfindung kann es vorgesehen sein, dass die interne Versorgungsspannungs-Frequenz-Steueranordnung auch mittels eines außerhalb des Prozessorelements erzeugtem Steuersignal gesteuert wird, welches beispielsweise über ein entsprechendes Bussystem wie ein Network-on-Chip an die interne Versorgungsspannungs-Frequenz-Steueranordnung übertragen wird. Mittels dieses Steuersignals wird somit der Performance Level also der Versorgungsspannungspegel und die Taktfrequenz für den Prozessorkern festgelegt.

Für eine Erzeugung dieses Steuersignals mittels des eigenen Prozessorkerns ist es vorgesehen, dass beispielsweise über ein Network-on-Chip empfangene Ereignisse in einen lokalen Warteschlangenspeicher geschrieben werden. Basierend auf dem Füllstand des lokalen Warteschlangenspeichers also der Anzahl der zu verarbeitenden Events wird zu festgelegten Zeitpunkten die aktuelle Rechenlast ermittelt. Allgemein bedeutet eine geringe Anzahl von empfangenen und somit zu verarbeitenden Ereignissen eine geringe Rechenlast für den Prozessorkern, während eine sehr große Anzahl von zu verarbeitenden Ereignissen eine hohe Rechenlast darstellt. Dies gilt insbesondere auch deshalb, weil die Verarbeitung der Ereignisse in der Regel innerhalb eines vorgegebenen Zeitfensters, also eines Zyklus, durchgeführt werden muss, um eine Verarbeitung der Ereignisse in Echtzeit zu ermöglichen.

Vorgesehen ist es, dass der lokalen Warteschlangenspeicher ein im Prozessorelement angeordneter Speicher ist, welcher mit dem Prozessorkern, dem internen Speicher des Prozessorelements und mit einem Pegelumsetzer verbunden ist.

Vorgesehen ist es auch, dass der lokale Warteschlangenspeicher per Software unter Nutzung des Datenspeichers des Prozessorkerns realisiert wird. Weiterhin ist es vorgesehen, dass der lokale Warteschlangenspeicher durch ein Hardware-Modul realisiert wird, welches entweder den Datenspeicher des Prozessors oder einen separaten Speicher nutzt. Dieses Hardware-Modul ist beispielsweise eine sogenannte externe Versorgungsspannungs-Frequenz-Steueranordnung, welche über das Bussystem Network-on-Chip mit dem Prozessorkern verbunden ist.

Vorgesehen ist es, dass eine Ermittlung der aktuellen Rechenlast anhand des Füllstands des lokalen Warteschlangenspeichers zu festgelegten Zeitpunkten erfolgt. Für eine regelmäßige Erzeugung dieser Zeitpunkte ist es vorgesehen, einen Zeitgeber bzw. einen Timer mittels einer abzuarbeitenden Software zu realisieren. Alternativ kann die Erzeugung dieser Zeitpunkte mittels eines Zeitgebers erfolgen, welcher in einer Hardware-Lösung realisiert wird. Ebenfalls möglich ist es, zur Erzeugung dieser Zeitpunkte einen globalen Zeitgeber, welcher ebenfalls in Hardware realisiert ist, zu nutzen, welcher über das Bussystem Network-on-Chip zur Übertragung der Zeitpunkte mit dem Prozessorkern und der internen Versorgungsspannungs-Frequenz-Steueranordnung verbunden ist.

Für eine Realisierung eines Umschaltens des Versorgungsspannungslevels und der Taktfrequenz für den Prozessorkern, basierend auf einer ermittelten Rechenlast, also dem Füllstand des lokalen Warteschlangenspeichers, ist es vorgesehen, eine Tabelle (Look-up Tabelle) zu nutzen, in welcher sogenannte Grenz- oder Schwellwerte für den Füllstand des lokalen Warteschlangenspeichers zum Umschalten auf eine bestimmte Versorgungsspannung bzw. eine bestimmte Taktfrequenz abgelegt sind. Eine derartige Tabelle kann dabei in Software, beispielsweise gespeichert im Prozessorelement, oder auch mittels eines separaten Hardware-Moduls realisiert werden. In diesen Fällen ist der ermittelte Füllstand F des lokalen Warteschlangenspeichers eine Eingangsgröße für die Tabelle, aus welcher als Ausgangsgröße die Versorgungsspannung U und die Taktfrequenz f für den Prozessorkern ausgelesen werden können.

Eine Alternative zur Realisierung des Umschaltens der Versorgungsspannung und der Taktfrequenz für den Prozessorkern besteht darin, eine Formel zur Berechnung der Versorgungsspannung und der Taktfrequenz auf der Grundlage des aktuellen Füllstands F des lokalen Warteschlangenspeichers zu nutzen. Eine derartige Formel kann beispielsweise in einer Software im Prozessorelement oder in einem separaten Hardware-Modul realisiert sein.

In einem Beispiel für eine derartige Formel können drei Performance Level PL1, PL2 und PL3 vorgesehen sein, welche drei verschiedene Kombinationen je einer Versorgungsspannung U und einer Taktfrequenz f darstellen. Mit dem Performance Level PL1 wird beispielsweise eine Versorgungsspannung $U_1$ und eine Taktfrequenz $f_1$ für den Prozessorkern eingestellt, womit eine Verarbeitung einer geringen Anzahl von Ereignissen, bei einem geringen Füllstand F des lokalen Warteschlangenspeichers, ermöglicht wird.

Mit dem Performance Level PL2 wird beispielsweise eine Versorgungsspannung $U_2$ und eine Taktfrequenz $f_2$ für den Prozessorkern eingestellt, womit eine Verarbeitung von einer mittleren Anzahl von Ereignissen, bei einem mittleren Füllstand F des lokalen Warteschlangenspeichers, ermöglicht wird.

Mit dem Performance Level PL3 wird beispielsweise eine Versorgungsspannung $U_3$ und eine Taktfrequenz $f_3$ für den Prozessorkern eingestellt, womit eine Verarbeitung von einer großen Anzahl von Ereignissen, bei einem hohen Füllstand F des lokalen Warteschlangenspeichers, ermöglicht wird.

In einer Ausführung kann für den Performance Level PL1 eine Versorgungsspannung $U_1$ von 0,7 Volt bei einer Taktfrequenz $f_1$ von 125 MHz, für den Performance Level PL2 eine Versorgungsspannung $U_2$ von 0,85 Volt bei einer Taktfrequenz $f_2$ von 333 MHz und für den Performance Level PL3 eine Versorgungsspannung $U_3$ von 1,0 Volt bei einer Taktfrequenz $f_3$ von 500 MHz angegeben werden.

Hierbei gilt allgemein $U_1 < U_2 < U_3$ sowie $f_1 < f_2 < f_3$.

Zur formelmäßigen Bestimmung von Versorgungsspannung U und Taktfrequenz f für den Prozessorkern wird hinterlegt:

$$PL = PL1, wenn\ F < F_{th1}$$

$$PL = PL2, wenn\ F_{th1} \leq F < F_{th2}$$

$$PL = PL3, wenn\ F_{th2} \leq F$$

Wobei $F_{th1}$ ein erster Schwellwert und $F_{th2}$ ein zweiter Schwellwert ist und wobei der erste Schwellwert $F_{th1}$ kleiner als der zweite Schwellwert $F_{th2}$ ist.

Da eine Ermittlung der aktuellen Rechenlast anhand des Füllstands des lokalen Warteschlangenspeichers zu festgelegten Zeitpunkten für einen sogenannten Zyklus mit einer bestimmten Länge erfolgt, erfolgt auch die Umschaltung des Performance Levels PL zu diesen festgelegten Zeitpunkten. Das Umschalten des Performance Levels PL zu diesen Zeitpunkten kann beispielsweise ein Umschalten von $PL_1$ zu $PL_2$ sein, wenn sich der Füllstand F des Warteschlangenspeichers im aktuellen Zyklus gegenüber dem vorangegangenen Zyklus erhöht hat. Das Umschalten des Performance Levels PL zu diesen Zeitpunkten kann beispielsweise ein Umschalten von $PL_3$ zu $PL_2$ sein, wenn sich der Füllstand F des Warteschlangenspeichers im aktuellen Zyklus gegenüber dem vorangegangenen Zyklus verringert hat. Hat sich der Füllstand F des Warteschlangenspeichers im aktuellen Zyklus gegenüber dem vorangegangenen Zyklus nicht oder nicht wesentlich verändert, bleibt der Performance Level PL, welcher beispielsweise $PL_2$ war, auf dem gleichen Wert und ist somit wieder $PL_2$.

Der Füllstand F sowie der erster Schwellwert $F_{th1}$ und der zweiter Schwellwert $F_{th2}$ können beispielsweise prozentuale Angaben sein. Derart würde ein Füllstand F von 100 Prozent beispielsweise der maximal zu verarbeitenden Anzahl von Ereignissen in einem Zyklus entsprechen. Der erster Schwellwert $F_{th1}$ könnte beispielsweise bei 25 oder 33 Prozent und der zweiter Schwellwert $F_{th2}$ können beispielsweise bei 66 oder 75 Prozent festgelegt sein, wobei ein Fachmann eine geeignete Zuordnung der Schwellwerte $F_{th1}$ und $F_{th2}$ angepasst an aktuelle Forderungen vornehmen wird.

Ein Rücksetzen des beispielsweise aktuellen Performance Levels kann nach einer kompletten Abarbeitung der Anzahl der zu verarbeitenden Ereignisse vorgenommen werden.

Erfindungsgemäß vorgesehen ist es, dass ein Umschalten eines eingestellten Performance Levels bereits nach der Abarbeitung der Events im Prozessorkern und vor Erreichen des festgelegten Zeitpunktes am Zyklusende auf einen niedrigeren Performance Level erfolgt. Dass heißt, dass ein Rücksetzen der im Zeitpunkt t eingestellten Versorgungsspannung U und der Taktfrequenz f nach einer Abarbeitung der im aktuellen Zyklus durch den Prozessorkern zu verarbeitenden Ereignissen erfolgt, wobei das Rücksetzen auf eine kleinere oder die kleinste bereitgestellte Versorgungsspannung $U_1$ und die kleinste bereitgestellte Frequenz $f_1$ erfolgt.

Dieses vorzeitige Zurückschalten des Performance Levels, also ein Einstellen einer niedrigeren Versorgungsspannung U und einer niedrigeren Taktfrequenz f für den Prozessorkern führt zu einer zusätzlichen Einsparung von Energie und reduziert die Wärmeentwicklung im Prozessorkern. Dieses vorzeitige Zurückschalten des Performance Levels kann einen oder mehrere Performance Level PL umfassen. Die Umschaltung kann also auf den nächst niedrigeren Performance Level, beispielsweise von $PL_2$ auf $PL_1$, oder den übernächsten, niedrigeren Performance Level, beispielsweise von $PL_3$ auf $PL_1$, erfolgen.

In einer weiteren Ausführung der Erfindung ist es vorgesehen, dass das Zuschalten eines jeden Prozessorkerns an eine der Versorgungsspannungen $U_1$ oder $U_2$ oder $U_3$ mittels einer zentralen Versorgungsspannungsnetzsteuerung gesteuert wird, um eine Überlastung einer der die Spannungen $U_1$, $U_2$ und $U_3$ bereitstellenden Versorgungsspannungsleitungen bzw. einer die Spannungen erzeugenden Einheit zu verhindern. Zu diesem Zweck ist diese zentrale Versorgungsspannungsnetzsteuerung über ein Bussystem wie ein Network-on-Chip mit den Prozessorkernen und somit den Prozessoren und den internen Versorgungspannungs-Frequenz-Steueranordnungen in den Prozessorkernen verbunden.

Diese zentrale Versorgungsspannungsnetzsteuerung verwaltet die Ressourcen des Versorgungsspannungsnetzwerkes und limitiert die maximal mögliche Anzahl an Prozessoren, welche zu einer der Versorgungsspannungsleitungen, also zu einer der Spannungen $U_1$, $U_2$ und $U_3$ über das Schaltnetzwerk zugeschaltet werden können.

Diese Limitierung kann durch die Versorgungsspannungsnetzsteuerung beispielsweise durch eine Anfrage eines Prozessorkerns an die Versorgungsspannungsnetzsteuerung mittels eines Token erfolgen. Wird die aktuell durch den Prozessor beantragte Umschaltung auf eine bestimmte Versorgungsspannungsleitung durch die Versorgungsspannungsnetzsteuerung bestätigt, so erfolgt eine durch den Prozessor gesteuerte Umschaltung der Versorgungsspannung dieses Prozessors über das Schaltnetzwerk des Prozessorkerns auf die beantragte Versorgungsspannung.

Wird die aktuell durch den Prozessor beantragte Umschaltung auf eine bestimmte Versorgungsspannungsleitung durch die Versorgungsspannungsnetzsteuerung nicht freigegeben, da die maximale Anzahl der Zuschaltungen zu dieser Versorgungsspannungsleitung durch andere Prozessorkerne bereits erfolgt ist, erfolgt keine Umschaltung der Versorgungsspannung dieses Prozessorkerns über das Schaltnetzwerk. In diesem Fall kann der Prozessor eine erneute Anfrage an die Versorgungsspannungsnetzsteuerung stellen und beispielsweise ein Umschalten auf eine andere Versorgungsspannungsleitung mit einer niedrigeren Versorgungsspannung beantragen. Eine derartige Vergabe von Berechtigungen ist aus dem Stand der Technik bekannt und soll daher nicht weiter detailliert ausgeführt werden.

Hierbei ist es auch vorgesehen, dass die zentrale Versorgungsspannungsnetzsteuerung ein Steuersignal für die interne Versorgungspannungs-Frequenz-Steueranordnung erzeugt, welche über das Bussystem übertragen die interne Versorgungspannungs-Frequenz-Steueranordnung steuert und somit eine Versorgungsspannung und eine Frequenz auswählt. Somit kann die Auswahl eines beantragten und genehmigten Performance Levels ohne den Prozessor erfolgen.

Die Realisierung dieser zentralen Versorgungsspannungsnetzsteuerung ist sowohl in einer Software- wie auch in einer Hardwarelösung möglich.

Somit realisiert die Erfindung eine lokale Bestimmung des Spannungs- und Frequenzlevels eines Prozessorkerns, basierend auf dem Füllstand eines Warteschlangenspeichers, in definierten, durch einen Zeitgeber bestimmten Zeitabständen für jeden Zyklus.

Ermöglicht wird ein autonomes Umschalten der eigenen Versorgungsspannung und Taktfrequenz eines Prozessorkerns, wobei eine Überwachung der zur Verfügung stehenden Ressourcen durch eine zentrale Versorgungsspannungsnetzsteuerung erfolgt.

Die zuvor erläuterten Merkmale und Vorteile dieser Erfindung sind nach sorgfältigem Studium der nachfolgenden ausführlichen Beschreibung der hier bevorzugten, nicht einschränkenden Beispielausgestaltungen der Erfindung mit den zugehörigen Zeichnungen besser zu verstehen und zu bewerten, welche zeigen:

Fig. 1: eine Blockschaltbild eines Prozessors mit mehreren Prozessorelementen,

Fig. 2: ein Blockschaltbild eines Prozessorelements mit einer dynamischen Einstellung einer Versorgungsspannung und einer Taktfrequenz,

Fig. 3: eine zeitliche Darstellung eines Ablaufs einer ereignis-basierten Simulation mit einer dynamischen Einstellung einer Versorgungsspannung und einer Taktfrequenz in einem nicht beanspruchten Beispiel zur Erleichterung des Verständnisses der Erfindung,

Fig. 4:  eine zeitliche Darstellung eines Ablaufs einer ereignis-basierten Simulation mit einer dynamischen Einstellung einer Versorgungsspannung und einer Taktfrequenz in einer Ausführungder Erfindung,

Fig. 5:  eine Darstellung einer dynamischen Einstellung einer Versorgungsspannung und einer Taktfrequenz in Abhängigkeit von aktuell eintreffenden Events in einer Simulation und

Fig. 6:  eine Darstellung von drei Histogrammen mit der jeweiligen Anzahl von benötigten Zyklen je Performance Level.

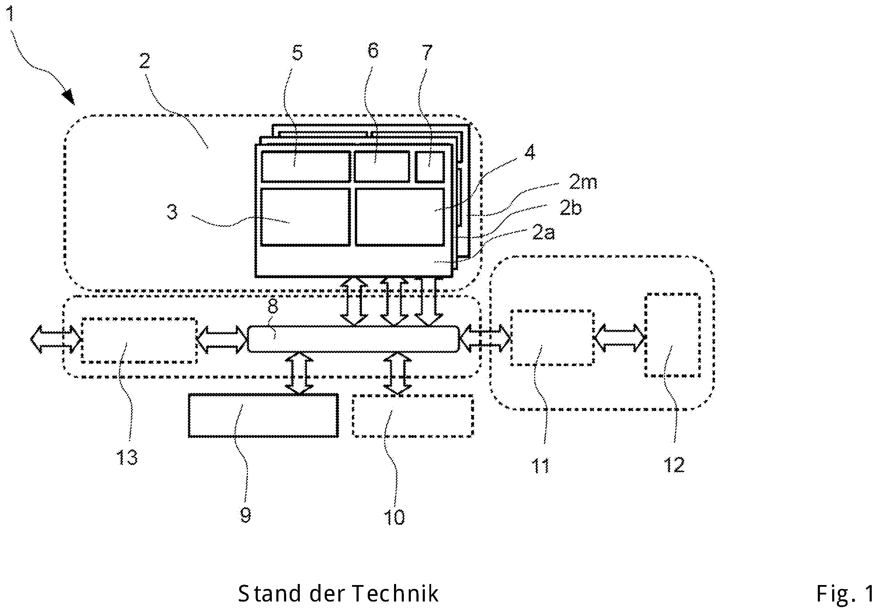

Die Figur 1 zeigt ein Blockschaltbild des Mehrkernprozessors 1 aus dem Stand der Technik, welcher eine Anzahl m von Prozessorelementen 2 aufweist. Jedes dieser Prozessorelemente 2 beinhaltet einen Prozessorkern 3, einen elektronischen Speicher 4, welcher beispielsweise ein sogenannter SRAM (englisch static random-access memory, SRAM) sein kann, einen lokalen Taktgenerator 5, eine interne Versorgungspannungs-Frequenz-Steueranordnung 6 sowie ein Schaltnetzwerk 7. Im Beispiel der Figur 1 sind die Prozessorelemente 2a, 2b bis 2m dargestellt, welche einen identischen Aufbau aufweisen.

Die m Prozessorelemente 2a, 2b, ..., 2m sind über ein Bussystem 8, welches auch als Network-on-Chip realisiert werden kann, zur Übermittlung von Daten untereinander und mit externen Einheiten verbindbar.

Das Bussystem 8 kann beispielsweise mit einem externen Taktgenerator 9 verbunden sein. Weiterhin kann an diesem Bussystem 8 eine externe Versorgungspannungs-Frequenz-Steueranordnung 10, eine erste Schnittstelle 11 zur Verbindung mit einem externen Speicher 12 oder eine zweite Schnittstelle 13, beispielsweise zur Verbindung mit einem externen Router, angeordnet sein.

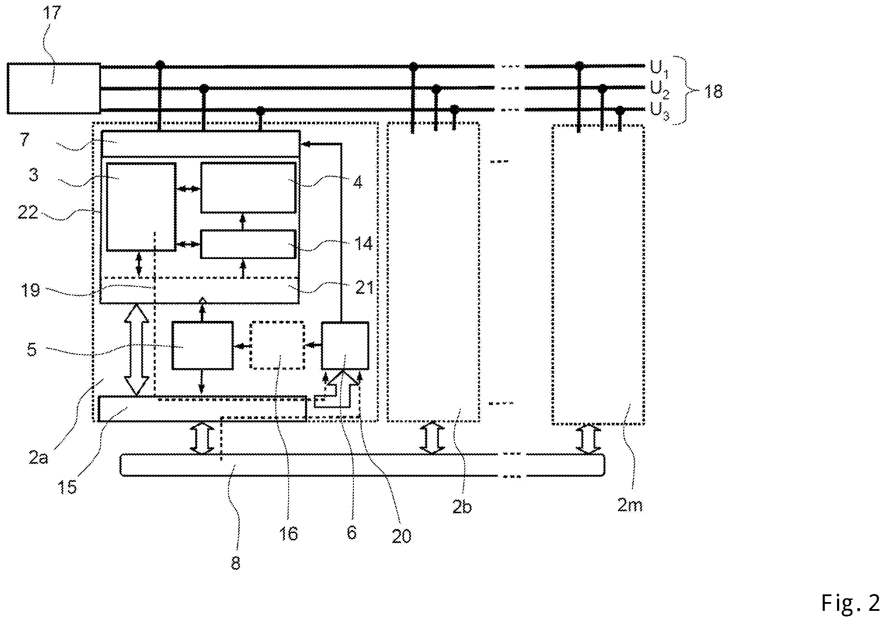

In der Figur 2 ist ein Blockschaltbild eines Prozessorelements 2a mit einer erfindungsgemäßen dynamischen Einstellung einer Versorgungsspannung und einer Taktfrequenz gezeigt. Jedes Prozessorelement 2a, 2b, ... , 2m beinhaltet einen Prozessorkern 3, einen elektronischen Speicher 4, einen lokalen Taktgenerator 5, eine interne Versorgungspannungs-Frequenz-Steueranordnung 6 sowie ein Schaltnetzwerk 7.

Zur Umsetzung der Erfindung weist jedes Prozessorelement 2 einen lokalen Warteschlangenspeicher 14 auf, in welchem die durch den Prozessorkern 3 abzuarbeitenden Ereignisse 24, welche beispielsweise innerhalb einer ereignis-basierten Simulation entstehen, abgespeichert sind. Dieser lokale Warteschlangenspeicher 14 ist im Beispiel in einer Hardwarelösung realisiert und mit dem Prozessorkern 3, dem internen Speicher 4 und einem Pegelumsetzer 21 über entsprechende Daten- bzw. Busleitungen verbunden.

Zur Kopplung der Prozessorelemente 2 an das Bussystem 8 ist je eine Busschnittstelle 15 vorgesehen, wie es in der Figur 2 dargestellt ist.

Die interne Versorgungspannungs-Frequenz-Steueranordnung 6 ist mit ihren Steuerleitungen mit dem internen Taktgenerator 5 und dem Schaltnetzwerk 7 verbunden. Mittels geeigneter Steuersignale steuert die interne Versorgungspannungs-Frequenz-Steueranordnung 6 über das Schaltnetzwerk 7 ein Zuschalten einer aktuell benötigten Versorgungsspannung $U_1$, oder $U_2$ oder $U_3$ an den Prozessorkern 3 und über den internen Taktgenerator 5 die Erzeugung einer im aktuellen Zyklus benötigten Taktfrequenz $f_1$ oder $f_2$ oder $f_3$. Zwischen der internen Versorgungspannungs-Frequenz-Steueranordnung 6 und dem internen Taktgenerator 5 kann optional eine Anpasseinheit 16 wie eine Look-up Tabelle angeordnet sein. Mittels einer derartigen Anpasseinheit 16 kann eine Anpassung zwischen dem von der internen Versorgungspannungs-Frequenz-Steueranordnung 6 ausgegebenen Steuersignal zur Auswahl einer aktuell einzustellenden Frequenz f und dem vom internen Taktgenerator 5 benötigten Format oder Signal zur Bereitstellung der gewünschten Frequenz f erfolgen.

Die Versorgungsspannungen $U_1$, $U_2$ und $U_3$ werden durch eine Spannungsversorgungseinheit 17 bereitgestellt. Beispielhaft sind in der Figur 2 drei verschiedene Spannungen $U_1$, $U_2$ und $U_3$ dargestellt. Eine Beschränkung auf drei mögliche Spannungen ist nicht vorgesehen. Die Spannungsversorgungsleitungen, welche ein Versorgungsspannungsnetz 18 bilden sind mit den Eingängen der Schaltnetzwerke 7 der Prozessorelemente 2a, 2b, ... 2m verbunden. Dabei ist es vorgesehen, dass durch das Steuersignal der internen Versorgungsspannungs-Frequenz-Steueranordnung 6 mittels der Schaltnetzwerke 7 jeweils eine der bereitgestellten Versorgungsspannungen $U_1$, oder $U_2$ oder $U_3$ an das jeweilige Prozessorelement 2a, 2b, ... 2m bzw. den jeweiligen Prozessor 3 durchgeschaltet wird.

Mit dem Durchschalten einer Versorgungsspannung $U_1$, oder $U_2$ oder $U_3$ an den jeweiligen Prozessorkern 3 ist auch ein Durchschalten dieser Versorgungsspannung an einen sogenannten spannungsvariablen Bereich 22 des Prozessorelements 2 gemeint. Dieser spannungsvariable Bereich 22 umfasst neben dem Prozessorkern 3 auch den mit dem Prozessorkern 3 verbundenen internen Speicher 4 sowie den lokalen Warteschlangenspeicher 14, also alle Baugruppen, welche in dem mittels einer durchgehenden Linie unter dem Schaltnetzwerk 7 dargestellten Kasten beinhaltet sind.

Zur Anpassung eines Signalpegels zwischen den Baugruppen im spannungsvariablen Bereich 22, welcher mit einer der drei bereitgestellten Spannungen $U_1$, oder $U_2$ oder $U_3$ betrieben werden kann und den mit einer konstanten Versorgungsspannung betriebenen außerhalb des spannungsvariablen Bereichs 22 angeordneten Baugruppen im Prozessorelement 2 ist ein Pegelumsetzte 21 vorgesehen. Dieser Pegelumsetzer 21, welcher auch als Pegelwandler oder englisch level shifter bezeichnet wird, sorgt beispielsweise in der Prinzipdarstellung der Figur 2 für eine Anpassung der Pegel zwischen dem spannungsvariablen Bereich 22 und dem internen Taktgenerator 5 sowie dem spannungsvariablen Bereich 22 und der Busschnittstelle 15.

Für eine Einstellung einer benötigten Versorgungsspannung für die Baugruppen im spannungsvariablen Bereich 22 sowie einer benötigten Taktfrequenz für den Prozessorkern 3 ist es vorgesehen, gesteuert durch den Prozessor 3 zu festgelegten Zeitpunkten den Füllstand des lokalen Warteschlangenspeichers 14, also die Anzahl der zu verarbeitenden Ereignisse 24 und somit die aktuelle Rechenlast, zu ermitteln. In Abhängigkeit des Füllstands F des lokalen Warteschlangenspeichers 14 bestimmt der Prozessor 3, beispielsweise mittels einer hinterlegten Formel bzw. eines Vergleichs mit gespeicherten Schwellwerten, einen für den nachfolgenden Zyklus der Abarbeitung der Ereignisse 24 einzustellenden Performance Level, als die benötigte Versorgungsspannung U und die benötigte Frequenz f. Diese durch den Prozessor 3 ermittelte Information über den benötigten Performance Level wird über den ersten Übertragungsweg 19 an die interne Versorgungsspannungs-Frequenz-Steueranordnung 6 übertragen, welche die Einstellung des Schaltnetzwerks 7 zur Auswahl einer Versorgungsspannung $U_1$, oder $U_2$ oder $U_3$ und des Frequenzgenerators 5 zur Erzeugung der Frequenz $f_1$ oder $f_2$ oder $f_3$ für den nächsten Zyklus steuert.

In einem nicht beanspruchten Beispiel zur Erleichterung des Verständnisses der Erfindung kann es vorgesehen sein, dass die Versorgungsspannungs-Frequenz-Steueranordnung 6 über einen zweiten Übertragungsweg 20 über die Busschnittstelle 15 und das Bussystem 8 von außerhalb des Prozessorelements 2 steuerbar ist. Diese Variante einer externen Steuerung ist für den Fall vorgesehen, dass die Prüfung des Füllstands F des lokalen Warteschlangenspeichers 14 zu festgelegten Zeitpunkten mittels einer externen Versorgungsspannungs-Frequenz-Steueranordnung 10 erfolgt, welche in der Figur 2 nicht dargestellt ist. Eine Darstellung der mit dem Bussystem 8 verbundenen externen Versorgungsspannungs-Frequenz-Steueranordnung 10 kann der Figur 1 entnommen werden. Diese Alternative ermöglicht eine aus dem Stand der Technik bekannte Form der Steuerung der Versorgungspannung und der Frequenz für den Prozessor 3.

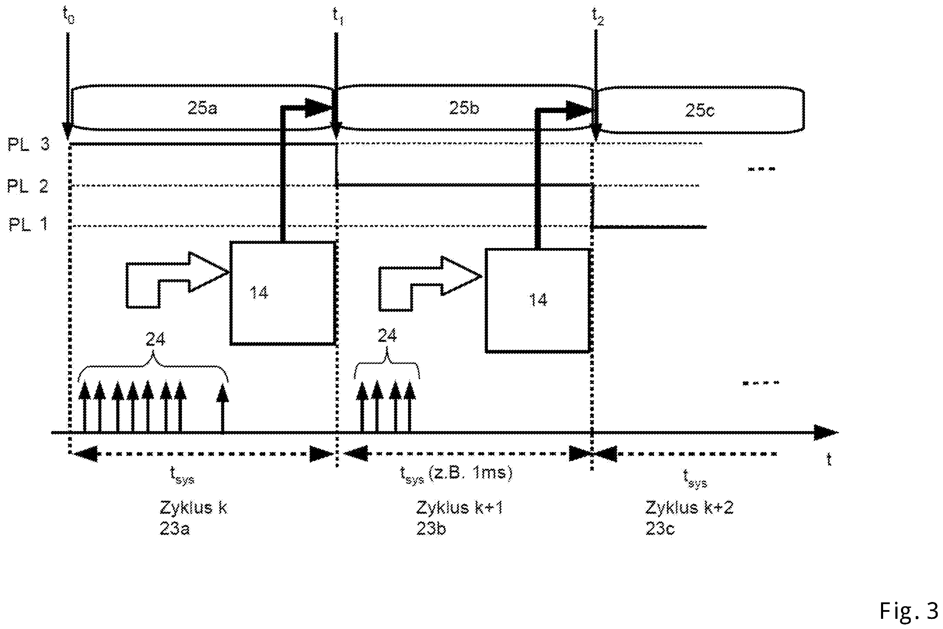

In der Figur 3 ist eine zeitliche Darstellung eines Ablaufs einer ereignis-basierten Simulation mit einer dynamischen Einstellung einer Versorgungsspannung und einer Taktfrequenz in einem nicht beanspruchten Beispiel zur Erleichterung des Verständnisses der Erfindung gezeigt.

In einem zeitlichen Verlauf sind auf der Abszisse mehrere nacheinander ablaufende Zyklen 23 dargestellt, in welchen jeweils eine aktuelle Anzahl von Ereignissen 24 durch den Prozessorkern 3 eines Prozessorelements 2 zu verarbeiten ist. Der erste Zyklus 23a ist mit Zyklus k, der zweite Zyklus 23b mit Zyklus k+1 und der dritte Zyklus 23c mit Zyklus k+2 bezeichnet. Die Zyklen 23 habe eine gleiche Dauer, welche im Beispiel der Figur 3 mit

$t_{sys}$ = 1ms angegeben ist.

Zu Beginn der Verarbeitung von Ereignissen 24, welche beispielsweise in einer ereignis-basierten Simulation auftreten, wird im Zeitpunkt t = 0 beispielsweise der höchste Performance Level PL3 eingestellt. Diesem Performance Level PL3 ist die größte Versorgungsspannung $U_3$ und die höchste durch den internen Taktgeber 5 erzeugbare Taktfrequenz $f_3$ zugeordnet. Somit ist eine Verarbeitung einer sehr großen Anzahl von Ereignissen 24 im ersten Zyklus 23a möglich.

Während der Abarbeitung 25a der in der Figur 3 nicht dargestellten Ereignisse 24 im ersten Zyklus 23a wird der lokale Warteschlangenspeicher 14 mit den im nachfolgenden zweiten Zyklus 23b beispielsweise abzuarbeitenden acht Ereignissen 24 gefüllt. Der Prozessorkern 3 prüft zu einem festgelegten Zeitpunkt $t_1$ den Füllstand F des lokale Warteschlangenspeicher 14 und bestimmt in Abhängigkeit dieses aktuellen Füllstandes F den für den nachfolgenden zweiten Zyklus 23b notwendigen Performance Level PL. Im Beispiel wurde für den nachfolgenden zweiten Zyklus 23b der Performance Level PL2 durch den Prozessorkern 3 bestimmt, welcher im Zeitpunkt $t_1$ mittels der internen Versorgungsspannung-Frequenz-Steueranordnung 6 eingestellt wird. Somit wird beispielsweise als Versorgungsspannung die Spannung $U_2$ und als Frequenz f eine mittlere durch den internen Taktgeber 5 erzeugbare Taktfrequenz $f_2$ gewählt, da die Anzahl der zu verarbeitenden acht Ereignisse 24 bzw. die Rechenlast geringer als im ersten Zyklus 23a ist.

Im zweiten Zyklus 23b werden die acht Ereignisse 24 im eingestellten Performance Level PL2 verarbeitet, während zeitgleich der lokale Warteschlangenspeicher 14 mit den im nachfolgenden dritten Zyklus 23c abzuarbeitenden vier Ereignissen 24 gefüllt wird. Im Beispiel wird nun im Zeitpunkt $t_2$ für den nachfolgenden dritten Zyklus 23c der Performance Level PL1 durch den Prozessorkern 3 bestimmt, welcher im Zeitpunkt $t_2$ mittels der internen Versorgungsspannung-Frequenz-Steueranordnung 6 eingestellt wird. Dieser Performance Level PL1, welchem die kleinste Versorgungsspannung $U_1$ und die kleinste durch den internen Taktgeber 5 erzeugbare Taktfrequenz $f_1$ zugeordnet ist, ist für die Verarbeitung der gegenüber dem vorhergehenden zweiten Zyklus 23b weiter verringerten Anzahl von vier zu verarbeitenden Ereignissen 24 im dritten Zyklus 23c ausreichend.

In diesem beschriebenen Ablauf wird das Verfahren im dritten und in den nachfolgenden Zyklen 23, welche in der Figur 3 nicht dargestellt sind, weiter fortgesetzt.

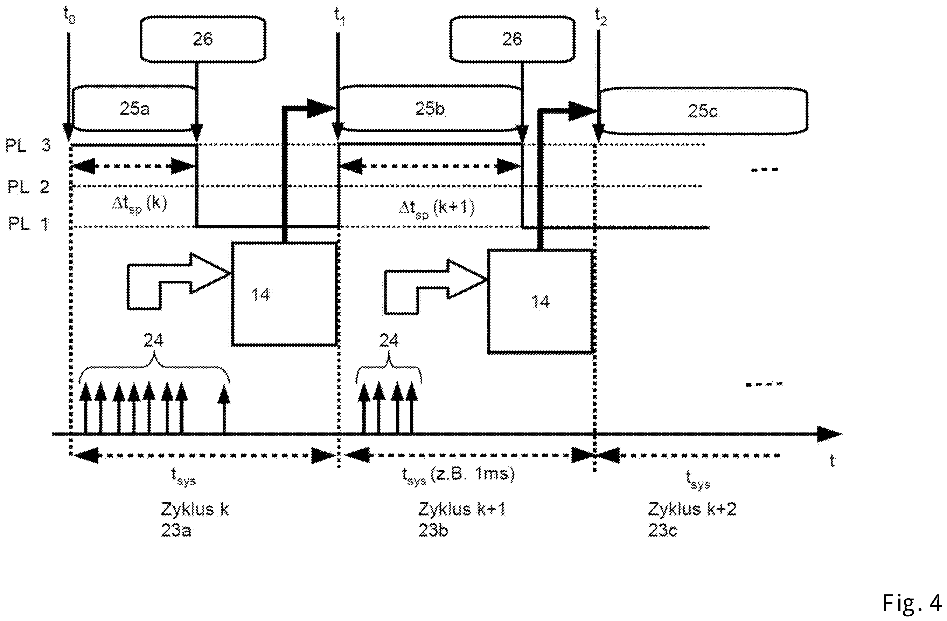

Die Figur 4 zeigt eine zeitliche Darstellung eines Ablaufs einer ereignis-basierten Simulation mit einer dynamischen Einstellung einer Versorgungsspannung und einer Taktfrequenz in einer Ausführung der Erfindung.

Der Ablauf der dynamischen Einstellung einer Versorgungsspannung und einer Taktfrequenz entspricht im Wesentlichen den Ausführungen zur Figur 3, auf welche hiermit verwiesen wird. Der Unterschied der Ausführung in der Figur 4 liegt darin, dass eine Prüfung der Verarbeitung der Ereignisse 24 in jedem Zyklus 23 innerhalb der Zeit der Abarbeitung 25a, 25b, 25c, ....usw. danach erfolgt, ob das letzte zu verarbeitende Ereignis 24 durch den Prozessorkern 3 verarbeitet wurde. Für den Fall, dass das letzte Ereignis 24 abgearbeitet oder verarbeitet worden ist, wird der aktuelle Performance Level beispielsweise auf das niedrigste Performance Level beispielsweise PL1 umgeschaltet. In einem speziellen Fall, in welchem das Prozessorelement 2 bzw. der Prozessor 3 bereits im niedrigsten Performance Level PL1 betrieben wird, bleibt der niedrigste Performance Level PL1 eingestellt.

Im Beispiel der Figur 4 wird zu Beginn der Verarbeitung der Ereignisse 24 im Zeitpunkt $t_0$ der Performance Level PL3 eingestellt. Ist das letzte zu verarbeitende Ereignis 24 in der Abarbeitung 25a verarbeitet, wird die Verarbeitung 25a beendet und ein Rücksetzen 26 des im Zeitpunkt $t_0$ eingestellten Performance Level PL3 durchgeführt. Vorteilhafterweise wird das Rücksetzen 26 derart durchgeführt, dass der geringste oder kleinste Performance Level, im Beispiel PL1, eingestellt wird. Durch dieses Zurücksetzen des Performance Levels für die im aktuellen Zyklus 23a noch verbleibende Zeit wird eine weitere Einsparung von Energie sowie eine weitere Reduzierung der Wärmeentwicklung der Prozessorkerne 3 erreicht.

Im Zeitpunkt $t_1$ wird nach dem bereits oben beschriebenen Verfahren der durch den Prozessorkern 3 aktuell anhand des Füllstands der lokalen Warteschlange 14 ermittelte Performance Level eingestellt, welcher in diesem Beispiel der Performance Level PL3 sein soll. Nachfolgend beginnt die Abarbeitung 25b der im zweiten Zyklus 23b zu verarbeitenden Ereignisse 24 in üblicher Weise. Nach der Abarbeitung des letzten Ereignis 24 wird die Abarbeitung 25b beendet und es erfolgt wiederum ein Rücksetzen 26 des aktuell eingestellten Performance Levels PL3 auf den Performance Level PL1 in welchem das Prozessorelement 2 bzw. der Prozessorkern 3 bis zum Ende des zweiten Zyklus 23b verbleibt, bis im Zeitpunkt $t_2$ ein wiederum aktuell ermittelter Performance Level eingestellt wird. Der im Zeitpunkt $t_0$ gesetzte Performance Level PL3 wird im ersten Zyklus 23a für eine Dauer von $\Delta t_{SP}(k)$ beibehalten. Der im Zeitpunkt $t_1$ gesetzte Performance Level PL3 wird im zweiten Zyklus 23b für eine Dauer von $\Delta t_{SP}(k+1)$ beibehalten, wie es in der Figur 4 dargestellt ist.

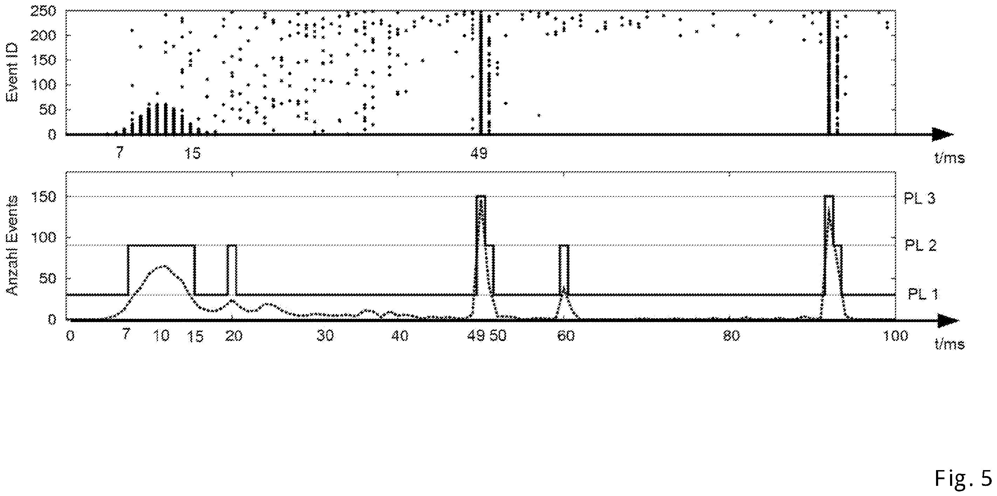

In der Figur 5 ist eine Darstellung einer dynamischen Einstellung einer Versorgungsspannung und einer Taktfrequenz in Abhängigkeit von aktuell eintreffenden Ereignissen 24 in einer Beispiel-Simulation dargestellt.

Die Figur 5 zeigt in einer oberen Darstellung einen zeitlichen Verlauf des Auftretens von zu verarbeitenden Ereignissen 24 in einer ereignis-basierten Simulation. Im oberen Bereich der Figur 5 ist das Auftreten von mit einer Identifikationsnummer ID versehenen Ereignissen 24 in einem zeitlichen Verlauf dargestellt. Zu erkennen ist beispielsweise in einem Bereich um ca. 7ms bis 15ms ein häufigeres Auftreten bestimmter Ereignisse 24. In einem Bereich um ca. 49ms bis 50ms ist ein besonders starkes Auftreten von Ereignissen 24 zu verzeichnen. Zu diesem Zeitpunkt treten fast all möglichen 250 Ereignisse zeitgleich auf.

Mittels einer Punkt-Punkt-Linie ist im unteren Teil der Figur 5 die Anzahl der empfangenen Ereignisse 24 dargestellt. Die durchgezeichnete Linie stellt den aktuell eingestellten Performance Level PL für ein Prozessorelement 2 dar, welcher zwischen den Performance Leveln PL1, PL2 und PL3 umgeschaltet werden kann. Die Auswahl und Umschaltung der Performance Level PL erfolgt nach einem bereits zur Figur 3 oder Figur 4 erläutertem Verfahren.

Zu erkennen ist es, dass sich der aktuelle Performance Leveln PL nach der Anzahl der zu verarbeitenden Ereignisse 24 richtet. So wird bei einer großen Anzahl von ca. 150 zu verarbeitenden Ereignissen 24 durch den Prozessorkern 3 beispielsweise in einem Bereich von ca. 49ms bis 50ms der Performance Level PL3 zugeschaltet, währen bei einer mittleren Anzahl von ca. 65 zu verarbeitenden Ereignisse 24 beispielsweise im Bereich nach ca. 7ms bis 15ms der Performance Level PL2 ausreichend ist, um alle anstehenden Ereignisse 24 innerhalb der in einem Zyklus 23 zur Verfügung stehenden Zeit sicher abzuarbeiten. Diese sichere Verarbeitung der Ereignisse 24 innerhalb eines Zyklus 23 gewährleistet eine echtzeitfähige Verarbeitung der bei einer Simulation auftretenden Ereignisse 24.

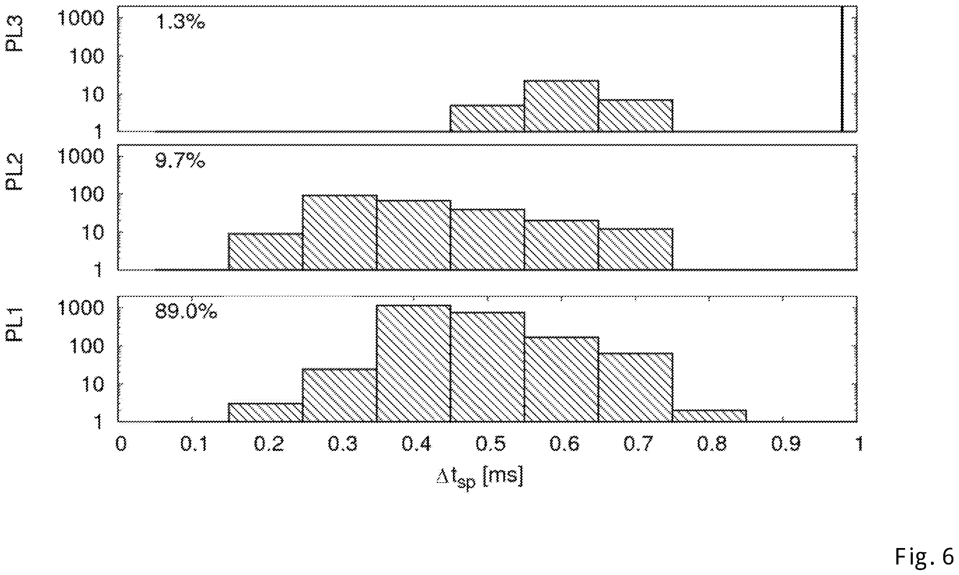

In der Figur 6 ist eine Darstellung von drei Histogrammen mit der jeweiligen Anzahl von benötigten Zyklen je Performance Level PL gezeigt. In der untersten Darstellung der Figur 6 ist zu erkennen, dass bei einer durchgeführten und analysierten ereignis-basierten Simulation 89,0 Prozent aller Zyklen 23 mit einem eingestellten Performance Level PL1 abgearbeitet wurden. Die am häufigsten auftretende Dauer $\Delta t_{SP}$, welche zur Abarbeitung aller aufgetretenen Ereignisse 24 innerhalb eines Zyklus 23 benötigt wurde, liegt bei 0,4 ms.

In der mittleren Darstellung der Figur 6 ist zu erkennen, dass bei dieser ereignis-basierten Simulation 9,7 Prozent aller Zyklen 23 mit einem eingestellten Performance Level PL2 abgearbeitet wurden. Die an häufigsten auftretende Dauer $\Delta t_{SP}$, welche zur Abarbeitung aller aufgetretenen Ereignisse 24 innerhalb eines Zyklus 23 benötigt wurde, liegt im Performance Level PL2 bei 0,3 ms.

In der obersten Darstellung der Figur 6 ist zu erkennen, dass bei dieser ereignis-basierten Simulation 1,3 Prozent aller Zyklen 23 mit einem eingestellten Performance Level PL2 abgearbeitet wurden. Die an häufigsten auftretende Dauer $\Delta t_{SP}$, welche zur Abarbeitung aller aufgetretenen Ereignisse 24 innerhalb eines Zyklus 23 benötigt wurde, liegt im Performance Level PL3 bei 0,6 ms.

Ein mögliches Anwendungsbeispiel einer hier beschriebenen ereignis-basierten Simulation kann eine Anwendung mit einer Kamera und einer Auswertung des aktuellen Kamerabildes sein. Zu diesem Zweck kann der Erfassungsbereich der Kamera in mehrere Teilbereiche unterteilt sein, wobei jeder dieser Teilbereiche zu einem Prozessorelement 2 bzw. einem Prozessorkern 3 zur Verarbeitung der im jeweiligen Teilbereich auftretenden Ereignisse 24 zugeordnet ist. Steht beispielsweise ein Mehrkernprozessor 1 mit vier Prozessorelementen 2 zur Verfügung, so kann eine Aufteilung in vier Teilbereiche erfolgen. Im Fall eines Mehrkernprozessors 1 mit acht Prozessorelementen 2 kann eine Aufteilung in acht Teilbereiche usw. erfolgen.

Da das Auftreten von Ereignissen 24, welche eine Veränderung eines Parameters wie beispielsweise einer Beleuchtungsstärke eines Pixels der Kamera sein können, in den verschiedenen Teilbereichen nicht voraussagbar und unterschiedlich intensiv ist, kommt das vorgestellte Verfahren zur dynamischen Einstellung einer Versorgungsspannung und einer Taktfrequenz, also eines Performance Levels PL, durch den jeweiligen Prozessorkern 3 des jeweiligen Prozessorelements 2 in Abhängigkeit der Anzahl seiner zu verarbeitenden Ereignisse 24 zur individuellen Steuerung jedes einzelnen Prozessorelements 2 zur Anwendung.

Auch wenn als Beispiele in dieser Beschreibung ereignis-basierte Simulationen beschrieben werden ist die Anwendung der Erfindung nicht allein auf diese Form beschränkt.

Generell besteht die Anwendbarkeit dann, wenn die Rechenlast eines Prozessorelementes 2 nicht global vorhersagbar ist, sondern sich während des Betriebs des Systems dynamisch auf Grundlage von Eingangsdaten ergibt. Dabei müssen diese Eingangsdaten nicht zwingend Ereignisse im zeitlichen Sinne darstellen. Beispielsweise ist die Methode auch für eine Klassifikation von Daten in großen Mengen (Datenbanken) denkbar, wobei das Ereignis dann beispielsweise das Auftreten eines speziellen Musters in den zu prozessierenden Datensätzen bezeichnet, wobei dies zu zusätzlichen Rechenschritten führen kann.

Dies betrifft z.B. auch die Klassifikation von Bilddaten mit Methoden des Deep-Learning, also die Anwendung von neuronalen Netzwerken. Hierbei stellt das Ereignis die Übertragung eines gewichteten synaptischen Signals von einer Neuronen Schicht des Netzwerks zu einer anderen dar. Auch wenn hier explizit kein zeitlicher Bezug vorliegt.

In typischen Anwendungsfällen der Erfindung in Multiprozessorsystemen in modernen CMOS-Technologien, wie z.B. 28nm CMOS oder 22nm CMOS, liegen typische Versorgungsspannungswerte im Bereich von 0,40V bis 1,00V und Taktfrequenzen des Prozessors im Bereich von 50 MHz bis 2 GHz.

Einige der besonderen Vorteile der dynamischen Einstellung einer Versorgungsspannung und einer Taktfrequenz werden nachfolgend aufgelistet:

• Ausführen der Abarbeitung von Events in der eventbasierten Simulation im Prozessorelement wie einem Prozessorkern mit minimal notwendiger Versorgungsspannung und/oder Taktfrequenz. Dadurch wird eine signifikante Reduktion der Verlustleistung erreicht.

• Anwendung für Event-basierte Simulationen in denen die Rechenlast einzelner Prozessorkerne nicht vorhersagbar ist, da sie von den Eingangssignalen (Events) abhängt.

• Vermeidung von Überlastung der Versorgungsspannungsnetzwerke im Betrieb des Systems.

## LISTE DER BEZUGSZEICHEN

| 1 | Mehrkernprozessor |
|---|---|
| 2, 2a, 2b, ..., 2m | Prozessorelement |
| 3 | Prozessorkern |
| 4 | interner Speicher (z. B. SRAM) |
| 5 | interner Taktgenerator |
| 6 | interne Versorgungspannungs-Frequenz-Steueranordnung |
| 7 | Schaltnetzwerk |
| 8 | Bussystem (z.B. ausgeführt als Network-on-Chip) |
| 9 | externer Taktgenerator |
| 10 | externe Versorgungspannungs-Frequenz-Steueranordnung |
| 11 | erste Schnittstelle |
| 12 | externer Speicher |
| 13 | zweite Schnittstelle |
| 14 | lokaler Warteschlangenspeicher |
| 15 | Busschnittstelle |
| 16 | Anpasseinheit (Look-up Tabelle) |
| 17 | Spannungsversorgungseinheit |
| 18 | Versorgungsspannungsnetz |
| 19 | erster Übertragungsweg |
| 20 | zweiter Übertragungsweg |
| 21 | Pegelumsetzer |
| 22 | spannungsvariabler Bereich |
| 23, 23a, 23b, 23c | Zyklus |
| 24 | Ereignis (Event) |
| 25, 25a, 25b, 25c | Abarbeitung Ereignis |
| 26 | Rücksetzen des gesetzten Performance Levels PL |

## Patentansprüche

1. Mehrkernprozessor (1) zur dynamischen Einstellung einer Versorgungsspannung und einer Taktfrequenz, welcher mehrere Prozessorelemente (2) aufweist, wobei in jedem Prozessorelement (2) in einem spannungsvariablen Bereich (22) mindestens ein Prozessorkern (3), ein interner Speicher (4), ein Schaltnetzwerk (7) und ein Pegelumsetzer (21) angeordnet ist, **dadurch gekennzeichnet, dass** in dem spannungsvariablen Bereich (22) des Prozessorelements (2) zur Speicherung von durch den Prozessorkern (3) abzuarbeitenden Ereignisse (24) ein lokaler Warteschlangenspeicher (14) angeordnet ist, wobei eine Anzahl von in dem lokalen Warteschlangenspeicher (14) gespeicherten abzuarbeitenden Ereignisse (24) bestimmt wird, dass der lokale Warteschlangenspeicher (14) mit dem Prozessorkern (3), dem interner Speicher (4) und dem Pegelumsetzer (21) verbunden ist, dass in jedem Prozessorkern (3) ein lokaler Taktgenerator (5), zur Einstellung einer benötigten Taktfrequenz f für jeden Zyklus (23), angeordnet ist, dass der Prozessorkern (3) mit dem eine benötigte Versorgungsspannung U für jeden Zyklus (23) einstellenden Schaltnetzwerk (7) zur Verbindung des Prozessorkerns (3) mit einer von mehreren verfügbaren Versorgungsspannungsleitungen eines Versorgungsspannungsnetzwerks (18) verbunden ist, dass das Versorgungsspannungsnetzwerks (18) mit einer Spannungsversorgungseinheit (17) zur Bereitstellung mehrerer Spannungen verbunden ist und dass jeder Prozessorkern (3) dazu ausgelegt ist, dass die Einstellung der benötigten Versorgungsspannung U und der benötigten Taktfrequenz f für jeden Zyklus (23) gesteuert durch den Prozessorkern (3) des jeweiligen Prozessorelements (2) in Abhängigkeit einer Ermittlung einer Anzahl von in einem internen Warteschlangenspeicher (14) gespeicherten, abzuarbeitenden Ereignissen (24) erfolgt, und dass ein Rücksetzen der eingestellten Versorgungsspannung U und der Taktfrequenz f nach einer Abarbeitung der im aktuellen Zyklus durch den Prozessorkern zu verarbeitenden Ereignissen erfolgt, wobei das Rücksetzen auf eine kleinere oder die kleinste bereitgestellte Versorgungsspannung $U_1$ und die kleinste bereitgestellte Frequenz $f_1$ erfolgt.

2. Mehrkernprozessor (1) nach Anspruch 1, **dadurch gekennzeichnet, dass** in jedem Prozessorelement (2) eine durch den zugehörigen Prozessorkern (3) steuerbare interne Versorgungsspannungs-Frequenz-Steueranordnung (6) angeordnet ist.

3. Mehrkernprozessor (1) nach Anspruch 2, **dadurch gekennzeichnet, dass** die interne Versorgungsspannungs-Frequenz-Steueranordnung (6) mit dem Schaltnetzwerk (7) und einem internen Taktgenerator (5) verbunden ist.

4. Mehrkernprozessor (1) nach Anspruch 3, **dadurch gekennzeichnet, dass** zwischen der internen Versorgungsspannungs-Frequenz-Steueranordnung (6) und dem internen Taktgenerator (5) eine Anpasseinheit (16) angeordnet ist.

5. Verfahren zur dynamischen Einstellung einer Versorgungsspannung und einer Taktfrequenz, bei welchem in einem Mehrkernprozessor (1) mit mehreren Prozessorelementen (2) für ein Prozessorelement (2) eine Auswahl einer benötigten Versorgungsspannung U, aus einer Anzahl von bereitgestellten Versorgungsspannungen $U_1$, $U_2$, ... $U_x$, und eine Auswahl einer benötigten Taktfrequenz f, aus einer Anzahl von bereitgestellten Taktfrequenzen $f_1$, $f_2$, ... $f_y$, zu einem Zeitpunkt t für einen Zyklus (23) einer Verarbeitung einer Anzahl von Ereignissen (24) durch einen Prozessorkern (3), vorgenommen wird, **dadurch gekennzeichnet, dass** die Einstellung der benötigten Versorgungsspannung U und der benötigten Taktfrequenz f für jeden Zyklus (23) gesteuert durch den Prozessorkern (3) des jeweiligen Prozessorelements (2) in Abhängigkeit einer Ermittlung einer Anzahl von in einem internen Warteschlangenspeicher (14) gespeicherten, abzuarbeitenden Ereignissen (24) erfolgt und dass ein Rücksetzen der im Zeitpunkt t eingestellten Versorgungsspannung U und der Taktfrequenz f nach einer Abarbeitung der im aktuellen Zyklus (23) durch den Prozessorkern (3) zu verarbeitenden Ereignissen (24) erfolgt, wobei das Rücksetzen auf eine kleinere oder die kleinste bereitgestellte Versorgungsspannung $U_1$ und die kleinste bereitgestellte Frequenz $f_1$ erfolgt.

6. Verfahren nach Anspruch 5, **dadurch gekennzeichnet, dass** die Ermittlung der Anzahl der im internen Warteschlangenspeicher (14) gespeicherten, abzuarbeitenden Ereignissen (24) einmal pro Zyklus (23) zum festgelegten Zeitpunkt t erfolgt.

7. Verfahren nach Anspruch 5 oder 6, **dadurch gekennzeichnet, dass** die Einstellung der benötigten Versorgungsspannung U und der benötigten Taktfrequenz f einmal pro Zyklus (23) zum festgelegten Zeitpunkt t für einen zeitlich nachfolgenden Zyklus (23) erfolgt.

8. Verfahren nach einem der Ansprüche 5 bis 7, **dadurch gekennzeichnet, dass** die Versorgungsspannung U und die Taktfrequenz f aus der Anzahl der im internen Warteschlangenspeicher (14) gespeicherten, abzuarbeitenden Ereignissen (24) mithilfe einer Tabelle bestimmt werden.

9. Verfahren nach einem der Ansprüche 5 bis 7, **dadurch gekennzeichnet, dass** die Versorgungsspannung U und die Taktfrequenz f aus der Anzahl der im internen Warteschlangenspeicher (14) gespeicherten, abzuarbeitenden Ereignissen (24) mithilfe einer Formel oder Schwellwerten bestimmt werden.

10. Verfahren nach einem der Ansprüche 5 bis 9, **da-**

**durch gekennzeichnet, dass** mittels der Anzahl der im internen Warteschlangenspeicher (14) gespeicherten, abzuarbeitenden Ereignissen (24) ein Füllstand F bestimmt und ein erster Schwellwert $F_{th1}$ und ein zweiter Schwellwert $F_{th2}$ festgelegt wird, wobei gilt $F_{th1} < F_{th2}$, dass für den Fall, dass $F < F_{th1}$ ist, die Versorgungsspannung $U_1$ und die Taktfrequenz $f_1$ für den nachfolgenden Zyklus (23) eingestellt wird, dass für den Fall, dass $F_{th1} \leq F < F_{th2}$ ist, die Versorgungsspannung $U_2$ und die Taktfrequenz $f_2$ für den nachfolgenden Zyklus (23) eingestellt wird, dass für den Fall, dass $F_{th2} \leq F$ ist, die Versorgungsspannung $U_3$ und die Taktfrequenz $f_3$ für den nachfolgenden Zyklus (23) eingestellt wird, wobei gilt, $U_1 < U_2 < U_3$ und $f_1 < f_2 < f_3$.

**Claims**

1. A multi-core processor (1) for dynamically setting a supply voltage and a clock frequency which has several processor elements (2), wherein at least one processor core (3), an internal memory (4), a switching network (7) and a level converter (21) are arranged in every processor element (2) in a voltage-variable region (22), **characterised in that** a local queue memory (14) is arranged in the voltage-variable region (22) of the processor element (2) for storing events (24) to be processed by the processor core (3), wherein a number of events (24) to be processed stored in the local queue memory (14) is determined, **in that** the local queue memory (14) is connected to the processor core (3), the internal memory (4) and the level converter (21), **in that** a local clock generator (5) for setting a required clock frequency f for every cycle (23) is arranged in every processor core (3), **in that** the processor core (3) is connected to the switching network (7) setting a required supply voltage U for every cycle (23) for connecting the processor core (3) to one of several available supply voltage lines of a supply voltage network (18), **in that** the supply voltage network (18) is connected to a supply voltage unit (17) for providing several voltages and **in that** every processor core (3) is adapted so that the setting of the required supply voltage U and the required clock frequency f for every cycle (23) controlled by the processor core (3) of the respective processor element (2) is carried out as a function of a determination of a number of events (24) stored in an internal queue memory (14) and to be processed, and **in that** a resetting of the set supply voltage U and the clock frequency f is carried out after a processing of the events to be processed in the current cycle by the processor core, wherein the resetting is to a smaller or the smallest provided supply voltage $U_1$ and the smallest provided frequency $f_1$.

2. The multi-core processor (1) according to claim 1, **characterised in that** an internal supply voltage-frequency control arrangement (6) which can be controlled by the associated processor core (3) is arranged in each processor element (2).

3. The multi-core processor (1) according to claim 2, **characterised in that** the internal supply voltage-frequency control arrangement (6) is connected to the switching network (7) and an internal clock generator (5).

4. The multi-core processor (1) according to claim 3, **characterised in that** an adaptation unit (16) is arranged between the internal supply voltage-frequency control arrangement (6) and the internal clock generator (5).

5. A method for dynamically setting a supply voltage and a clock frequency, wherein a selection of a required supply voltage U from a number of provided supply voltages $U_1$, $U_2$, ...$U_x$ and a selection of a required clock frequency f from a number of provided clock frequencies $f_1$, $f_2$, ... $f_y$ is carried out for a processor element (2) in a multi-core processor (1) with several processor elements (2) at a time t for a cycle (23) of a processing of a number of events (24) through a processor core (3), **characterised in that** the setting of the required supply voltage U and the required clock frequency f for every cycle (23) controlled by the processor core (3) of the respective processor element (2) is carried out as a function of a determination of a number of events (24) stored in an internal queue memory (14) and to be processed and **in that** a resetting of the supply voltage U and the clock frequency f set at the time *t* is carried out after a processing of the events (24) to be processed in the current cycle (23) by the processor core (3), wherein the resetting is to a smaller or the smallest provided supply voltage $U_1$ and the smallest provided frequency $f_1$.

6. The method according to claim 5, **characterised in that** the determination of the number of events (24) stored in the internal queue memory (14) and to be processed is carried out once per cycle (23) at the specified time t.

7. The method according to claim 5 or 6, **characterised in that** the setting of the required supply voltage U and the required clock frequency f is carried out once per cycle (23) at the specified time t for a temporally subsequent cycle (23).

8. The method according to any one of claims 5 to 7, **characterised in that** the supply voltage U and the clock frequency f are determined by means of a table from the number of events (24) stored in the internal queue memory (14) and to be processed.

9. The method according to any one of claims 5 to 7, **characterised in that** the supply voltage U and the clock frequency f are determined by means of a formula or threshold values from the number of events (24) stored in the internal queue memory (14) and to be processed.

10. The method according to any one of claims 5 to 9, **characterised in that** a filling level F is determined and a first threshold value $F_{th1}$ and a second threshold value $F_{th2}$ set by means of the number of the events (24) stored in the internal queue memory (14) and to be processed, wherein $F_{th1} < F_{th2}$, **in that** in case $F < F_{th1}$, the supply voltage $U_1$ and the clock frequency $f_1$ is set for the subsequent cycle (23), **in that** in case $F_{th1} \leq F < F_{th2}$, the supply voltage $U_2$ and the clock frequency $f_2$ is set for the subsequent cycle (23), **in that** in case $F_{th2} < F$, the supply voltage $U_3$ and the clock frequency $f_3$ is set for the subsequent cycle (23), wherein $U_1 < U_2 < U_3$ and $f_1 < f_2 < f_3$.

**Revendications**

1. Processeur multicœur (1) de réglage dynamique d'une tension d'alimentation et d'une fréquence d'horloge, qui présente plusieurs éléments de processeur (2), au moins un cœur de processeur (3), une mémoire interne (4), un réseau de commutation (7) et un convertisseur de niveau (21) étant disposés dans chaque élément de processeur (2) dans une zone à tension variable (22), **caractérisé en ce qu'**une mémoire de file d'attente (14) locale est disposée dans la zone à tension variable (22) de l'élément de processeur (2) pour mémoriser des événements (24) à traiter par le cœur de processeur (3), un nombre d'événements (24) à traiter, mémorisés dans la mémoire de file d'attente (14) locale, étant déterminé, **en ce que** la mémoire de file d'attente (14) locale est connectée au cœur de processeur (3), à la mémoire interne (4) et au convertisseur de niveau (21), **en ce qu'**un générateur d'horloge (5) local est disposé dans chaque cœur de processeur (3) pour régler une fréquence d'horloge f requise pour chaque cycle (23), **en ce que** le cœur de processeur (3) est connecté au réseau de commutation (7) réglant une tension d'alimentation U requise pour chaque cycle (23) pour connecter le cœur de processeur (3) à l'une de plusieurs lignes de tension d'alimentation disponibles d'un réseau de tension d'alimentation (18), **en ce que** le réseau de tension d'alimentation (18) est connecté à une unité d'alimentation en tension (17) pour fournir plusieurs tensions et **en ce que** chaque cœur de processeur (3) est conçu pour cela, que le réglage de la tension d'alimentation U requise et de la fréquence d'horloge f requise pour chaque cycle (23) est commandé par le cœur de processeur (3) de l'élément de processeur (2) respectif en fonction d'une détermination d'un nombre d'événements (24) à traiter, mémorisés dans une mémoire de file d'attente interne (14), et **en ce qu'**une réinitialisation de la tension d'alimentation U réglée et de la fréquence d'horloge f a lieu après un traitement des événements à traiter dans le cycle actuel par le cœur de processeur, la réinitialisation ayant lieu à une tension d'alimentation $U_1$ plus petite ou à la plus petite tension d'alimentation mise à disposition et à la plus petite fréquence $f_1$ mise à disposition.

2. Processeur multicœur (1) selon la revendication 1, **caractérisé en ce qu'un** dispositif de commande de tension d'alimentation-fréquence interne (6) pouvant être commandé par le cœur de processeur (3) correspondant est disposé dans chaque élément de processeur (2).

3. Processeur multicœur (1) selon la revendication 2, **caractérisé en ce que** le dispositif de commande de tension d'alimentation-fréquence interne (6) est connecté au réseau de commutation (7) et à un générateur d'horloge interne (5).

4. Processeur multicœur (1) selon la revendication 3, **caractérisé en ce qu'**une unité d'adaptation (16) est disposée entre le dispositif de commande de tension d'alimentation-fréquence interne (6) et le générateur d'horloge interne (5).

5. Procédé de réglage dynamique d'une tension d'alimentation et d'une fréquence d'horloge, dans lequel, dans un processeur multicœur (1) comportant plusieurs éléments de processeur (2), une sélection d'une tension d'alimentation U requise, parmi un nombre de tensions d'alimentation $U_1$, $U_2$, ... $U_x$ mises à disposition, et une sélection d'une fréquence d'horloge f requise, parmi un nombre de fréquences d'horloge $f_1$, $f_2$, ... $f_y$ mises à disposition, sont effectuées pour un élément de processeur (2) à un moment t pour un cycle (23) de traitement d'un nombre d'événements (24) par un cœur de processeur (3), **caractérisé en ce que** le réglage de la tension d'alimentation U requise et de la fréquence d'horloge f requise pour chaque cycle (23) est commandé par le cœur de processeur (3) de l'élément de processeur (2) respectif en fonction d'une détermination d'un nombre d'événements (24) à traiter, mémorisés dans une mémoire de file d'attente interne (14), et **en ce qu'**une réinitialisation de la tension d'alimentation U réglée au moment t et de la fréquence d'horloge f a lieu après un traitement des événements (24) à traiter dans le cycle actuel (23) par le cœur de processeur (3), la réinitialisation ayant lieu à une tension d'alimentation $U_1$ plus petite ou à la plus petite tension d'alimentation mise à disposition et à la plus petite fréquence $f_1$ mise à disposition.

6. Procédé selon la revendication 5, **caractérisé en ce que** la détermination du nombre d'événements (24) à traiter, mémorisés dans la mémoire de file d'attente interne (14), a lieu une fois par cycle (23) au moment $t$ fixé.

7. Procédé selon la revendication 5 ou 6, **caractérisé en ce que** le réglage de la tension d'alimentation U requise et de la fréquence d'horloge f requise a lieu une fois par cycle (23) au moment t fixé pour un cycle (23) suivant dans le temps.

8. Procédé selon l'une des revendications 5 à 7, **caractérisé en ce que** la tension d'alimentation U et la fréquence d'horloge f sont déterminées à partir du nombre d'événements (24) à traiter, mémorisés dans la mémoire de file d'attente interne (14) à l'aide d'un tableau.

9. Procédé selon l'une des revendications 5 à 7, **caractérisé en ce que** la tension d'alimentation U et la fréquence d'horloge f sont déterminées à partir du nombre d'événements (24) à traiter, mémorisés dans la mémoire de file d'attente interne (14) à l'aide d'une formule ou de valeurs seuils.

10. Procédé selon l'une des revendications 5 à 9, **caractérisé en ce qu'un** niveau de remplissage F est déterminé au moyen du nombre d'événements (24) à traiter, mémorisés dans la mémoire de file d'attente interne (14), et une première valeur seuil $F_{th1}$ et une deuxième valeur seuil $F_{th2}$ sont fixées, avec $F_{th1} < F_{th2}$, **en ce que**, dans le cas où $F < F_{th1}$, la tension d'alimentation $U_1$ et la fréquence d'horloge $f_1$ sont réglées pour le cycle (23) suivant, que dans le cas où $F_{th1} \leq F < F_{th2}$, la tension d'alimentation $U_2$ et la fréquence d'horloge $f_2$ sont réglées pour le cycle (23) suivant, que dans le cas où $F_{th2} \leq F$, la tension d'alimentation $U_3$ et la fréquence d'horloge $f_3$ sont réglées pour le cycle (23) suivant, avec $U_1 < U_2 < U_3$ et $f_1 < f_2 < f3$.

Stand der Technik

Fig. 1

Fig. 2

Fig. 3

Fig. 4

Fig. 5

EP 3 631 597 B1

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7685446 B2
- US 8671413 B2
- US 8639862 B2
- DE 102009019824 A1
- DE 102005047619 A1

**In der Beschreibung aufgeführte Nicht-Patentliteratur**

- **S. HÖPPNER** ; **C. SHAO** ; **H. EISENREICH** ; **G. ELLGUTH** ; **M. ANDER** ; **R. SCHÜFFNY**. A Power Management Architecture for Fast Per-Core DVFS in Heterogeneous MPSoCs. *IEEE International Symposium on Circuits and Systems*, 2012, 261-264

- **E. PAINKRAS** ; **L. A. PLANA** ; **J. GARSIDE** ; **S. TEMPLE** ; **F. GALLUPPI** ; **C. PATTERSON** ; **D. R. LESTER** ; **A. D. BROWN** ; **S. B. FURBER**. Spinnaker: A 1-w 18-core system-on-chip for massively-parallel neural network simulation. *IEEE Journal of Solid-State Circuits*, August 2013, vol. 48 (8), 1943-1953